# EUROPEAN PATENT SPECIFICATION

(11) **EP 0 602 626 B1**
(45) Date of publication and mention of the grant of the patent: **14.04.1999**
(21) Application number: 93120219.6
(22) Date of filing: 15.12.1993
(51) Int. Cl.: G11B 15/70, G11B 23/12

(54) **System for feeding tape**
System zum Zuführen eines Bandes
Système d'alimentation de bande

(30) Priority: 16.12.1992 JP 336150/92
(43) Date of publication of application: 22.06.1994
(73) Proprietor: Sony Precision Technology Inc., Shinagawa-ku Tokyo (JP)
(72) Inventor: Takao, Yoshiki, Chigasaki City, Kanagawa Prefecture (JP); Takahashi, Ryuji, Isehara City, Kanagawa Prefecture (JP)
(74) Representative: Grünecker, Kinkeldey, Stockmair & Schwanhäusser Anwaltssozietät

(56) References cited:
- DE-A- 2 821 814
- GB-A- 2 219 428
- US-A- 4 727 440
- US-A- 4 727 442
- US-A- 5 066 347

## Description

### BACKGROUND OF THE INVENTION

The present invention relates to a system for feeding tape, which is utilized in a tape duplicator system for duplicating recording information on a master tape to a slave tape.

Tape duplicator systems and tape feed systems generally utilized therein are well known in the art. Examples of such a tape duplicator system and a tape feed system are disclosed in United States Patent No. 5,095,390 issued to Kazuo Nagaoka et. al. on March 10, 1992. The tape feed system disclosed includes a loop box for storing a predetermined length of endless tape in interleaving folds. The loop box has an inlet and an outlet, a capstan disposed adjacent the inlet, and a vibration plate associated with the capstan for feeding the tape toward the outlet.

Other examples are disclosed in US-A-4727442 or US-A-4727440.

### SUMMARY OF THE INVENTION

An object of the present invention is to provide a tape feed system for feeding tape into a loop box, which is less complicated in curling or folding the tape in a generally uniform size for an increased bulk of tape in the loop box without interference of the respective folds.

The invention is specified in the appended claims. The preamble of claim 1 is based on US-A-4727442.

### BRIEF DESCRIPTION OF THE DRAWINGS

Fig. 1 is a fragmentary plan view of a tape duplicator system incorporating a first embodiment of a tape feed system according to the present invention;
Fig. 2 is a front elevation of the tape feed system of Fig. 1;
Fig. 3 is an exploded perspective view of the tape feed system of Fig. 1;
Figs. 4-9 are explanatory diagrams showing steps of forming a curl of tape in a loop box of the tape feed system;
Fig. 10 shows a perspective view of a suction post arranged in the loop box;
Fig. 11 shows a plan view of the suction post of Fig. 10;
Figs. 12 and 13 show perspective and plan views of modifications of the suction post, respectively;
Fig. 14 illustrates a pneumatic circuitry arrangement which is used for creating a suction force applied to the tape;
Fig. 15 shows a modification of the guide surface;
Figs. 16-18 are explanatory diagrams showing shapes of the curl of tape with respect to positions of the suction post in the loop box; and
Fig. 19 is an explanatory diagram showing a relationship between the shape of the curl of tape and magnitude of the suction force.

### DESCRIPTION OF THE PREFERRED EMBODIMENT

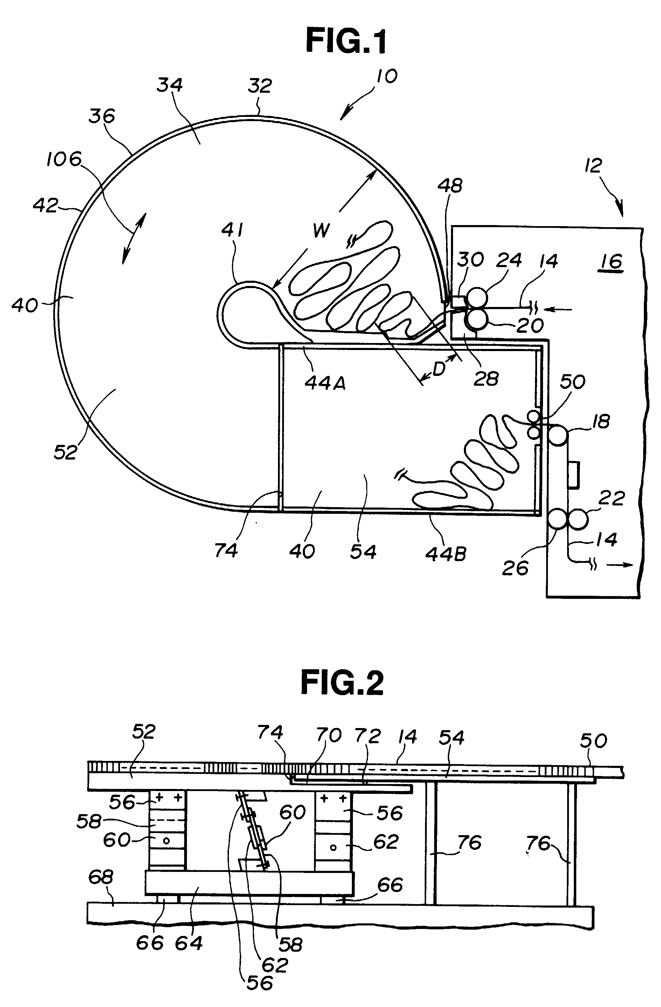

Referring now to Figs. 1 to 3, there is shown a tape feed system 10 incorporated in a tape duplicator system 12 of such a type as disclosed in United States Patent No. 5,095,390. The tape duplicator system 12 serves for duplicating information recorded on an endless master tape 14 to a slave tape (not shown). As shown in Fig. 1, the tape duplicator system 12 includes a mechanical panel 16 on which a guide roller 18, capstan rollers 20 and 22 and pinch rollers 24 and 26 opposed to the capstan rollers 20 and 22, are rotatably supported. Guide blocks 28 and 30 are opposingly disposed adjacent the capstan roller 20 and pinch roller 24.

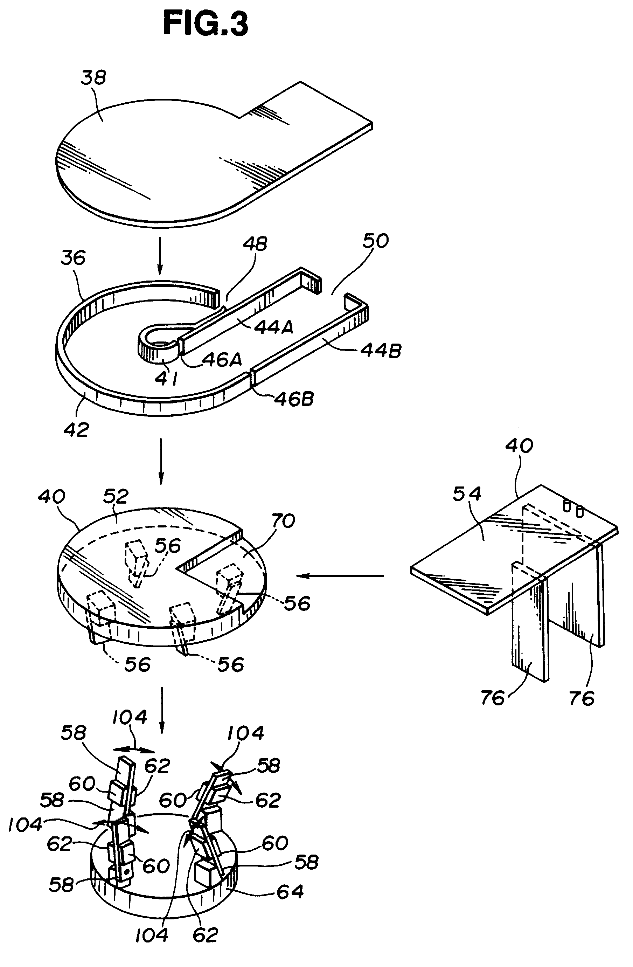

The tape feed system 10 disposed adjacent the tape duplicator system 12 includes a loop box 32 for storing the endless master tape 14 therein. The loop box 32 includes a storage chamber 34 for the master tape 14. The loop box 32 includes a peripheral wall 36 and spaced upper and lower end walls 38 and 40 as viewed in Fig. 3, which cooperate with each other to define the storage chamber 34.

The peripheral wall 36 includes an inner and outer circular wall portions 41 and 42 and two parallel straight wall portions 44A and 44B. As best seen in Fig. 3, the inner and outer circular wall portions 41 and 42 cooperate with each other to define an inlet 48 for the tape 14 and the straight wall portions 44A and 44B cooperate to define an outlet 50 for same. A clearance 46A is defined between the inner circular wall portion 41 and the adjacent end of the straight wall portion 44A. Similarly, another clearance 46B is defined between the outer circular wall portion 42 and the adjacent end of the straight wall portion 44B.

The lower end wall 40 comprises a disc plate 52 and a rectangular plate 54 which respectively support thereon the inner and outer circular portions 42 and the straight wall portions 44A and 44B of the peripheral wall 36.

As seen in Figs. 2 and 3, four yokes 56 are secured at one ends thereof to the disc plate 52 of the lower end wall 40. The yokes 56 are angularly spaced on the disc plate 52. Each yoke 56 is connected with a leaf spring 58 which has piezoelectric elements 60 and 62 on opposite sides thereof. The leaf spring 58 with the piezoelectric elements 60 and 62 is arranged on a floating base 64 rested on an elastic or resilient support 66 on a bottom wall 68 of the loop box 32. The piezoelectric elements 60 and 62 are so constructed as to be actuated to cause oscillation of the leaf spring 58 in a direction as indicated by double-headed arrows 104 in Fig. 3. The oscillation of the leaf spring 58 causes the disc plate 52 to vibrate angularly as indicated by a double-headed arrow 106 in Fig. 1.

As shown in Figs. 2 and 3, the disc plate 52 has a recessed portion 70 from which the rectangular plate 54 is spaced to make a vertical clearance 72 and a horizontal clearance 74 therebetween. The horizontal clearance 74 is equal to the clearances 46A and 46B (see Fig. 3). Upper surfaces of the disc plate 52 and the rectangular plate 54 are aligned to be flush with each other. The rectangular plate 54 has two spaced legs 76 extending from a lower surface thereof downwardly as viewed in Fig. 3. The rectangular plate 54 is secured via the legs 76 to the bottom wall 68 of the loop box 32. Thus, the disc plate 52 is out of contact with the rectangular plate 54 by provision of the vertical and horizontal clearances 72 and 74 therebetween.

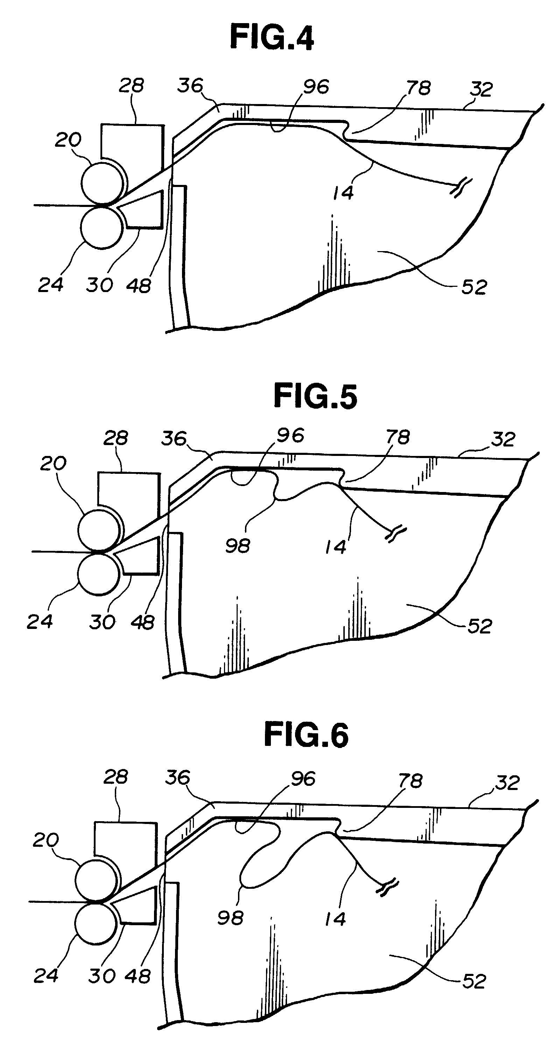

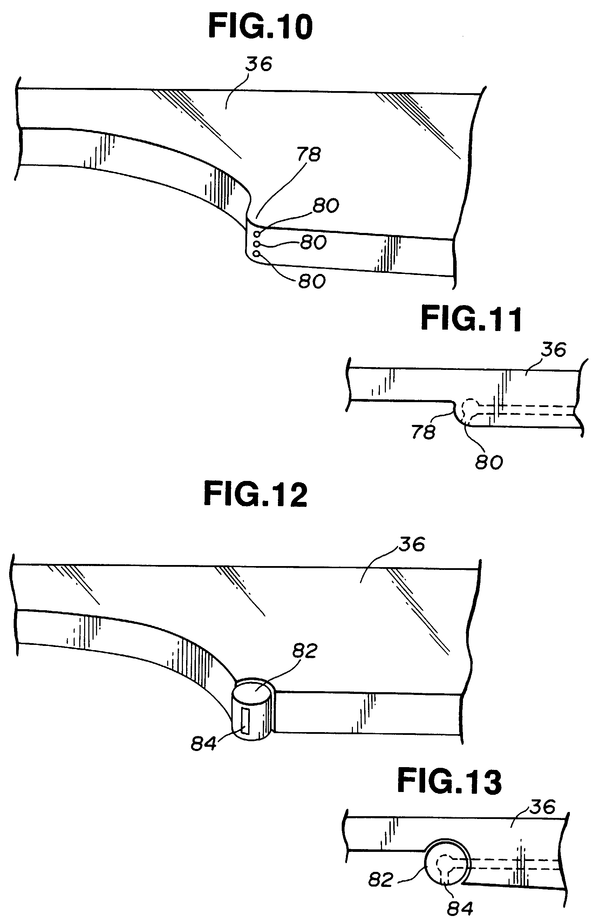

As shown in Fig. 4, the peripheral wall 36 of the loop box 32 has a suction post 78 at a portion spaced from the inlet 48. The suction post 78 is formed integrally with the peripheral wall 36 and projects inwardly from an inner surface thereof. The suction post 78 has a hollow body and a plurality of openings 80 through its cylindrical peripheral surface, as seen in Figs. 10 and 11. The suction post may be formed separately from the peripheral wall 36 of the loop box 32, as indicated at numeral 82 in Figs. 12 and 13. The suction openings may be in the form of a slot or groove 84 as shown in Fig. 12.

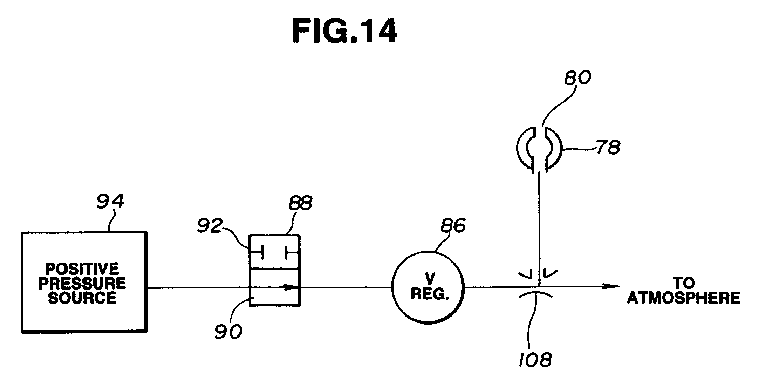

As shown in Fig. 14, the suction openings 80 are in fluid communication with a venturi 108 which is connected, via a constant pressure regulating valve 86 and a two-position valve 88, with a source of positive pressure 94. The two-position valve 88 has an open position 90 where the fluid communication between the regulating valve 86 and the positive pressure source 94 is established, and a closed position 92 where the fluid communication therebetween is blocked. In the open position 90 of the two-position valve 88, a constant air flow through the venturi 108 is created so that a vacuum is produced in the suction openings 80, creating an attraction force applied to the tape 14.

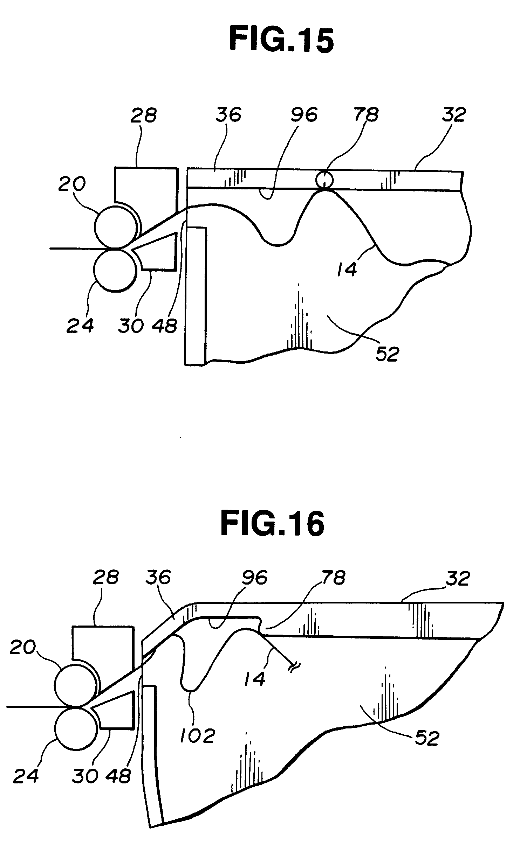

Referring back to Fig. 4, disposed on the peripheral wall 36 between the suction post 78 and the inlet 48 is a guide surface 96. The guide surface 96 merges into the peripheral surface of the suction post 78. In the modification as shown in Fig. 15, the guide surface 96 may be associated with the peripheral surface of the suction post 78 to form a flat face.

In operation, the endless master tape 14 is fed through the inlet 48 into the loop box 32 by rotation of the capstan and pinch rollers 20 and 24. The disc plate 52 of the end wall 40 of the loop box 32 vibrates for advancing the tape 14 within the storage chamber 34 toward the rectangular plate 54.

As shown in Fig. 4, the tape 14 travels along the guide surface 96 and attracted on one side thereof to the suction post 78. The travelling movement of the tape 14 is arrested owing to vacuum created in the suction openings 80. As the tape 14 is continuously fed into the loop box 32, the following portion of the tape 14 is dammed on the suction post 78. Accordingly, the tape 14 is caused to curl as indicated at 98 in Fig. 5, within a portion of the tape 14 downstream of the capstan roller 20 and upstream of the suction post 78. The continuous supply of the tape 14 into the loop box 32 causes the curl 98 of tape to grow as seen in Fig. 6.

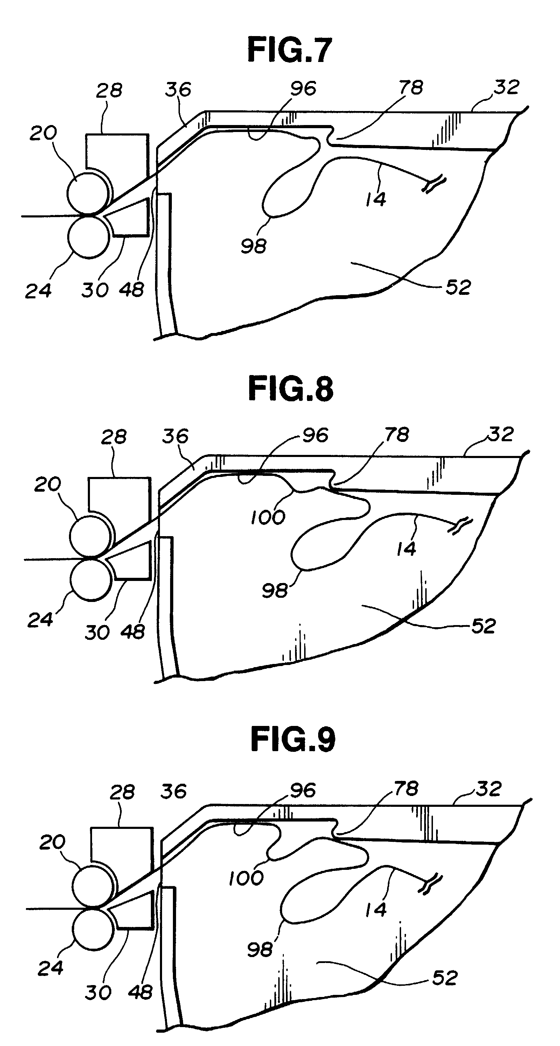

When the curl 98 of tape develops into a predetermined size, the arrested portion of the tape 14 is released from the suction post 78 as shown in Fig. 7. The predetermined size of curl, as denoted at D in Fig. 1, is represented in ratio relative to a width of the storage chamber 34, as denoted at W in Fig. 1, which extends in a generally lateral direction relative to the tape advancing direction. This ratio D/W preferably falls in a range from 1/3 to 1/4. The release of the arrested portion of the tape 14 is caused by the resilience of the curl 98 and the vibration of the disc plate 52 of the end wall 40.

As seen in Fig. 8, the curl 98 of tape advances toward the rectangular plate 54 by the vibration of the disc plate 52 while the travel of the tape 14 supplied is arrested again by the suction post 78 to form the next curl 100.

The curl 98 of tape moves on the disc plate 52 toward the rectangular plate 54 and the next curl 100 of tape is formed as shown in Fig. 9.

Subsequently, the next curl 100 develops and the arrested portion is released similarly in Fig. 7. The steps of advancing of the curl 100 and formation of the following curl is repeated similarly in Figs. 8 and 9.

Thus, the tape 14 is formed with a plurality of curls owing to the provision of the suction post 78 and advances on the disc plate 52 toward the rectangular plate 54. The tape 14 with the curls transported onto the rectangular plate 54 is urged toward the outlet 50 owing to the bias of the following tape portion continuously supplied through the inlet 48. The tape 14 is then driven by the capstan and pinch rollers 22 and 26 to pass through the outlet 50 outside the loop box 32.

As is appreciated from the above description, the tape 14 is stored in interleaving folds as seen in Fig. 1 in the storage chamber 34 of the loop box 32. The formation of curls of generally uniform size serves for storing an increased bulk of tape in the storage chamber 34.

Referring to Figs. 16 to 18, there are shown different shape of the curl 102 of tape in a case where the suction post 78 is arranged in different positions in the loop box 32. As the suction post 78 is arranged spaced apart from the inlet 48, the curl 102 becomes larger as seen in Figs. 16-18.

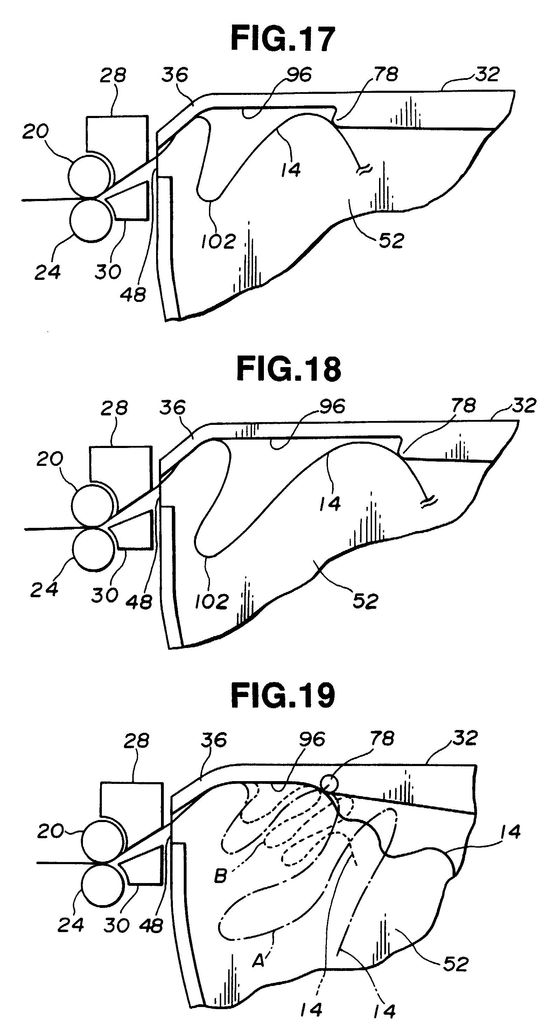

Referring to Fig. 19, there is described a relationship between the shape of the curl and the magnitude of suction on the suction post 78. When the magnitude of suction is at a predetermined level, a portion of the tape 14 downstream of the capstan and pinch rollers 20 and 24 and upstream of the suction post 78 is formed into a curl of the aforementioned predetermined size as indicated in the phantom line A of Fig. 19. When the magnitude of suction is greater than the predetermined level, the portion of the tape 14 has a curl as indicated in the phantom line B of Fig. 19, smaller than that of the phantom line A. When the magnitude of suction is smaller than the predetermined level, the portion of the tape 14 has no curl as indicated in the solid line of Fig. 19. Therefore, the positive pressure from the source is so adjusted as to keep the suction at the predetermined level.

In any cases, the position of the suction post 78 and the magnitude of suction are determined such that the ratio of size of the curl relative to the width of the storage chamber 34 preferably falls in a range from 1/3 to 1/4.

## Claims

1. A tape feed system (10) comprising:
a loop box (32) for storing tape (14) in interleaving folds, said loop box (32) having an inlet (48) and an outlet (50);
a capstan (20,24) disposed adjacent said inlet (48); and
means (78,80) for creating suction on one side of the tape (14) as the tape (14) enters said loop box (32) through said inlet (48) and causing the tape (14) to curl within a portion downstream of said capstan (20,24) and upstream of said suction, **characterized in that** said suction creating means (78,80) includes a venturi (108), a two-position valve (88) and a constant pressure regulating valve (86) fluidly disposed between said suction creating means (78,80) and said venturi (108).

2. A tape feed system as daimed in claim, wherein said suction creating means includes a hollow suction post (78) having at least one opening (80) through its peripheral surface.

3. A tape feed system as claimed in claim 2, wherein said suction creating means includes a source (94) of fluid pressure communicating with said suction opening (80) of said suction post (78).

4. A tape feed system as claimed in claim 2, wherein said suction creating means includes a guide structure having a guide surface (96) merging into said peripheral surface of said suction post (78).

5. A tape feed system as claimed in claim 4, wherein said loop box (32) includes a storage chamber (34) and wall means (36,38,40) for defining said storage chamber (34), and wherein said wall means (36,38,40) includes means (52) for advancing the tape (14) towards said outlet (50).

6. A tape feed system as claimed in claim 5, wherein said storage chamber (34) has a width (W) in a generally lateral direction relative to the tape advancing direction, and the size (D) of the curl of the tape (14) has a ratio in size relative to the width (W) of said storage chamber (34), said ration (D/W) preferable falling in a range from 1/3 to 1/4.

7. A tape feed system as claimed in claim 5, wherein said wall means includes a peripheral wall (36) and spaced end walls (38,40) which cooperate with each other in defining said storage chamber (34), and wherein said tape advancing means (52) includes a portion of one of said end walls (38,40).

8. A tape feed system as claimed n claim 7, wherein said peripheral wall (36) is formed with said inlet (48) and said outlet (50).

9. A tape feed system as claimed in claim 8, wherein said suction post (78) is formed integrally with said peripheral wall (36).

10. A tape feed system as claimed in claim 8, wherein said guide surface (96) includes a portion of said peripheral wall (36) extending between said inlet (48) and said suction post (78).

## Patentansprüche

1. Bandzuführeinrichtung (10) mit:
einem Schleifenbehälter (32) zur Aufbewahrung von Band (14) in einander überlappenden Falten, wobei der Schleifenbehälter (32) einen Einlaß (48) und einen Auslaß (50) hat,
einer Bandantriebsrolle (20, 24) neben dem Einlaß (48) und
einer Einrichtung (78, 80) zum Erzeugen einer Ansaugkraft auf einer Seite des Bandes (14), wenn das Band (14) durch den Einlaß (48) in den Schleifenbehälter (32) gelangt, und zum Wellen des Bandes (14) in einem Abschnitt in Bewegungsrichtung hinter der Bandantriebsrolle (20, 24) und vor der Ansaugstelle, **dadurch gekennzeichnet, daß** die Ansaugkraft-Erzeugungseinrichtung (78, 80) ein Venturi (108), ein Zweistellungsventil (88) und ein Ventil zur konstanten Druckregulierung (86) aufweist, welche eine Fluidverbindung zwischen der Ansaugkraft-Erzeugungseinrichtung (78, 80) und dem Venturi (108) haben.

2. Bandzuführeinrichtung (10) gemäß dem vorangehenden Anspruch, wobei die Ansaugkraft-Erzeugungseinrichtung einen hohlen Ansaugpfosten (78) mit mindestens einer seine Umfangsfläche durchquerenden Öffnung (80) aufweist.

3. Bandzuführeinrichtung (10) nach Anspruch 1, wobei die Ansaugkraft-Erzeugungseinrichtung eine Fluiddruckquelle (94) umfaßt, welche mit der Ansaugöffnung (80) des Ansaugpfostens (78) in Verbindung steht.

4. Bandzuführeinrichtung (10) nach Anspruch 2, wobei die Ansaugkraft-Erzeugungseinrichtung eine Führungseinrichtung mit einer Führungsoberfläche (96) aufweist, die in die Umfangsfläche des Ansaugpfostens (78) übergeht.

5. Bandzuführeinrichtung (10) nach Anspruch 4, wobei der Schleifenbehälter (32) eine Aufbewahrungskammer (34) und eine Wandeinrichtung (36, 38, 40) zur Abgrenzung der Aufbewahrungskammer (34) umfaßt und wobei die Wandeinrichtung (36, 38, 40) eine Einrichtung (52) zum Befördern des Bandes (14) zum Auslaß (50) hat.

6. Bandzuführeinrichtung (10) nach Anspruch 5, wobei die Aufbewahrungskammer (34) eine Breite (W) in allgemein seitlicher Richtung zur Bandvorschubrichtung hat und die Wellengröße (D) des Bandes zur Breite (W) der Aufbewahrungskammer (34) ein Größenverhältnis (D:W) hat, welches vorzugsweise zwischen 1:3 und 1:4 liegt.

7. Bandzuführeinrichtung (10) nach Anspruch 5, wobei die Wandeinrichtung eine Umfangswand (36) und zueinander beabstandete Stirnwände (38, 40) hat, die zusammen die Aufbewahrungskammer (34) bilden, und wobei die Bandtransporteinrichtung (52) einen Abschnitt von einer der Stirnwände (38, 40) umfaßt.

8. Bandzuführeinrichtung (10) nach Anspruch 7, wobei in der Umfangswand (36) ein Einlaß (48) und ein Auslaß (50) ausgebildet sind.

9. Bandzuführeinrichtung (10) nach Anspruch 8, wobei der Ansaugpfosten (78) integral mit der Umfangswand (36) ausgebildet ist.

10. Bandzuführeinrichtung (10) nach Anspruch 8, wobei die Führungsoberfläche (96) einen Abschnitt der Umfangswand (36) aufweist, der zwischen dem Einlaß (48) und dem Ansaugpfosten (78) verläuft.

## Revendications

1. Système d'alimentation de bande (10) comprenant :
une boîte de bouclage (32) pour stocker une bande (14) selon des plis entrelacés, ladite boîte de bouclage (32) ayant une entrée (48) et une sortie (50) ;
un galet d'entraînement (20, 24) disposé pour être adjacent à ladite entrée (48) ; et
un moyen (78, 80) pour créer une aspiration sur un côté de la bande (14) lorsque la bande (14) entre dans ladite boîte de bouclage (32) à travers ladite entrée (48) et en amenant la bande (14) à se boucler dans une partie en aval dudit galet d'entraînement (20, 24) et en amont de ladite aspiration, caractérisé en ce que ledit moyen créant l'aspiration (78, 80) comporte un venturi (108), une vanne à deux positions (88) et une vanne de réglage de pression constante (86) disposée fluidement entre ledit moyen créant l'aspiration (78, 80) et ledit venturi (108).

2. Système d'alimentation de bande selon la revendication 1, dans lequel ledit moyen créant l'aspiration comporte un montant d'aspiration creux (78) ayant au moins une ouverture (80) à travers sa surface périphérique.

3. Système d'alimentation de bande selon la revendication 2, où ledit moyen créant l'aspiration comporte une source (94) de fluide sous pression communiquant avec ladite ouverture d'aspiration (80) dudit montant d'aspiration (78).

4. Système d'alimentation de bande selon la revendication 2, dans lequel ledit moyen créant l'aspiration comporte une structure de guidage avec une surface de guidage (96) se fondant dans ladite surface périphérique dudit montant d'aspiration (78).

5. Système d'alimentation de bande selon la revendication 4, dans lequel ladite boîte de bouclage (32) comporte une chambre de stockage (34) et des moyens formant paroi (36, 38, 40) pour définir ladite chambre de stockage (34), et dans lequel lesdits moyens formant paroi (36, 38, 40) comportent un moyen (52) pour faire avancer la bande (14) vers ladite sortie (50).

6. Système d'alimentation de bande selon la revendication 5, où ladite chambre de stockage (34) a une largeur (W) dans une direction généralement latérale relativement à la direction d'avance de la bande, et la taille (D) de la boucle de la bande (14) a un rapport de taille relativement à la largeur (W) de ladite chambre de stockage (34), ledit rapport (D/W) tombant de préférence dans une plage de 1/3 à 1/4.

7. Système d'alimentation de bande selon la revendication 5, dans lequel ledit moyen formant paroi comporte une paroi périphérique (36) et des parois d'extrémité espacées (38, 40) qui coopèrent les unes avec les autres pour définir ladite chambre de stockage (34), et dans lequel ledit moyen (52) faisant avancer la bande comporte une portion d'une desdites parois d'extrémité (38, 40).

8. Système d'alimentation de bande selon la revendication 7, dans lequel ladite paroi périphérique (36) présente ladite entrée (48) et ladite sortie (50).

9. Système d'alimentation de bande selon la revendication 8, dans lequel ledit montant d'aspiration (78) est réalisé intégralement avec ladite paroi périphérique (36).

10. Système d'alimentation de bande selon la revendication 8, dans lequel ladite surface de guidage (96) comporte une portion de ladite paroi périphérique (36) s'étendant entre ladite entrée (48) et ledit montant d'aspiration (78).
